# FASCICULE DE BREVET EUROPEEN

(11) **EP 3 283 306 B1**
(45) Date de publication et mention de la délivrance du brevet: **26.02.2020**
(21) Numéro de dépôt: 16715541.5
(22) Date de dépôt: 11.04.2016
(51) Int. Cl.: B60C 9/20, B60C 9/07, B60C 9/22

(54) **ARMATURE DE RENFORCEMENT DE PNEUMATIQUE**
REIFENVERSTÄRKUNG
TYRE REINFORCEMENT

(30) Priorité: 17.04.2015 FR 1553420
(43) Date de publication de la demande: 21.02.2018
(73) Titulaire: Compagnie Générale des Etablissements Michelin, 63000 Clermont-Ferrand (FR)
(72) Inventeur: LE CLERC, Christophe, 63040 Clermont-Ferrand Cedex 9 (FR); PINEAU, Jacky, 63040 Clermont-Ferrand Cedex 9 (FR); CORNILLE, Richard, 63040 Clermont-Ferrand Cedex 9 (FR)
(74) Mandataire: Bauvir, Jacques
(86) Numéro de dépôt international: PCT/EP2016/057911
(87) Numéro de publication internationale: WO 2016/166056

(56) Documents cités:
- EP-A1- 2 537 686
- EP-A1- 2 682 281
- JP-A- 2001 206 010
- JP-A- 2011 148 418

## Description

L'invention a pour objet un pneumatique pour véhicule de tourisme, appelé communément pneumatique de tourisme, et plus particulièrement son armature de renforcement.

Un pneumatique étant une structure torique dont l'axe de révolution est l'axe de rotation du pneumatique, on définit ci-après les terminologies utilisées pour la présente invention:
- « direction axiale » : direction parallèle à l'axe de rotation du pneumatique,
- « direction radiale » : direction perpendiculaire à l'axe de rotation du pneumatique,
- « direction circonférentielle » : direction perpendiculaire à un plan radial contenant l'axe de rotation du pneumatique,
- « plan radial» : plan qui contient l'axe de rotation du pneumatique,
- « plan équatorial » : plan perpendiculaire à l'axe de rotation et qui passe par le milieu de la bande de roulement.

Un pneumatique comprend usuellement une bande de roulement, destinée à entrer en contact avec un sol et reliée, au niveau de ses extrémités axiales, radialement vers l'intérieur, par deux flancs à deux bourrelets, destinés à entrer en contact avec une jante. On appelle hauteur H du pneumatique, la distance radiale entre le point le plus radialement extérieur de la bande de roulement et la droite passant par les points les plus radialement intérieurs des bourrelets, le pneumatique étant monté sur sa jante.

Un pneumatique radial comprend en outre une armature de renforcement, comprenant radialement de l'extérieur vers l'intérieur au moins une armature de travail et une armature de carcasse.

L'armature de travail, radialement intérieure à la bande de roulement, comprend au moins une couche de travail comprenant des renforts de travail enrobés dans un matériau élastomérique, lesdits renforts de travail formant, avec la direction circonférentielle, un angle au moins égal à 10°. Le plus souvent, l'armature de travail d'un pneumatique de tourisme comprend deux couches de travail, dont les renforts de travail respectifs sont croisés d'une couche de travail à la suivante, de façon à réaliser une triangulation. Généralement les renforts de travail, pour un pneumatique de tourisme, sont constitués par un matériau métallique, le plus souvent par de l'acier, et sont formés par un assemblage de fils, appelé câble, ou par un seul fil.

L'armature de carcasse, radialement intérieure à l'armature de travail, relie les deux bourrelets du pneumatique, généralement en s'enroulant dans chaque bourrelet autour d'un élément de renforcement circonférentiel ou tringle, et comprend au moins une couche de carcasse comprenant des renforts de carcasse enrobés dans un matériau élastomérique. Dans le cas d'un pneumatique de tourisme, l'armature de carcasse comprend généralement une seule couche de carcasse. Dans le cas le plus fréquent d'une armature de carcasse radiale, les renforts de carcasse forment, avec la direction circonférentielle, en tout point de la couche de carcasse, un angle au moins égal à 85°. Généralement les renforts de carcasse, pour un pneumatique de tourisme, sont constitués par un matériau textile, tels que, à titre d'exemples et de manière non exhaustive, un polyamide aliphatique ou nylon, un polyamide aromatique ou aramide, un polyester tel qu'un polyéthylène-téréphtalate (PET), un matériau textile comprenant des fibres cellulosiques telles que la rayonne.

Souvent l'armature de renforcement comprend également une armature de frettage. Une armature de frettage est adjacente à l'armature de travail, c'est-à-dire radialement extérieure à l'armature de travail ou radialement intérieure à l'armature de travail. L'armature de frettage est généralement radialement extérieure à l'armature de carcasse. Elle comprend au moins une couche de frettage, et le plus souvent une seule couche de frettage. Une couche de frettage comprend des renforts de frettage, enrobés dans un matériau élastomérique et formant, avec la direction circonférentielle, un angle au plus égal à 5°. Les renforts de frettage, pour un pneumatique de tourisme, peuvent être constitués soit par un matériau textile, soit par un matériau métallique.

L'ensemble formé par l'armature de travail et l'armature de frettage constitue l'armature de sommet du pneumatique.

Au cours de son usage, un pneumatique de tourisme peut rouler sur des corps étrangers, poinçonnant sa bande de roulement et susceptibles d'entraîner une rupture partielle ou totale des couches de travail. Ceci est principalement dû à la forte rigidité, en particulier radiale, de l'armature de travail. Pour un pneumatique classique de l'état de la technique, les grandes déformations imposées par le poinçonnement de tels objets sont essentiellement supportées par l'armature de travail, mais pas par l'armature de carcasse.

Il est déjà connu du document US 4310043 un pneumatique radial destiné à des véhicules de type poids lourds et ayant une grande résistance à l'éclatement sous l'effet de chocs qui peuvent se produire lors du passage sur une pierre. Un tel pneumatique comprend notamment une armature de carcasse, n'ayant pas une résistance mécanique excessive et comprenant au moins une couche de carcasse pouvant comprendre des renforts textiles, et une armature de travail, radialement extérieure à l'armature de carcasse, comprenant trois couches de travail dont les deux plus radialement extérieures comprennent des renforts métalliques formant, par rapport à la direction circonférentielle, un angle compris entre 15° et 25°. Il existe encore le document JP 2001206010A.

Outre le poinçonnement du sommet d'un pneumatique par des corps étrangers, pouvant entraîner la perforation et la rupture de sommet, des sollicitations répétées sur le sommet telles que, par exemple, résultant d'un roulage sur un sol recouvert de galets, provoquent un martèlement du sommet pouvant générer une fatigue mécanique des renforts de sommet et, le cas échéant, leur rupture.

Les inventeurs se sont donnés comme objectif de concevoir un pneumatique pour véhicule de tourisme présentant à la fois une bonne résistance à la pénétration et à la perforation de son sommet par des objets étrangers, susceptibles de poinçonner ledit sommet, et une bonne résistance à la fatigue lorsque le sommet est soumis à un martèlement, avec une architecture de renforcement plus simple et plus légère que celle d'un pneumatique de tourisme de l'état de la technique.

L'invention a donc pour objet un pneumatique pour véhicule de tourisme comprenant :
- une bande de roulement, destinée à entrer en contact avec un sol et reliée, au niveau de ses extrémités axiales, radialement vers l'intérieur, par deux flancs à deux bourrelets, destinés à entrer en contact avec une jante,
- une armature de travail, radialement intérieure à la bande de roulement et comprenant au moins une couche de travail comprenant des renforts de travail métalliques enrobés dans un matériau élastomérique, lesdits renforts de travail formant, avec une direction circonférentielle du pneumatique, un angle A_{T} au moins égal à 10°,
- une armature de frettage, radialement intérieure à la bande de roulement et radialement adjacente à l'armature de travail, et comprenant une seule couche de frettage comprenant des renforts de frettage enrobés dans un matériau élastomérique, lesdits renforts de frettage formant, avec la direction circonférentielle, un angle A_{F} au plus égal à 5°,
- une armature de carcasse, reliant les deux bourrelets entre eux, radialement intérieure à l'armature de travail et à l'armature de frettage, et comprenant au moins une couche de carcasse comprenant des renforts de carcasse textiles enrobés dans un matériau élastomérique, lesdits renforts de carcasse formant, avec la direction circonférentielle, au moins en partie dans les flancs, un angle A_{C1} au moins égal à 85°,
- la couche de frettage ayant une force à rupture par mm de largeur axiale de couche de frettage FR au moins égale à 35 daN/mm,
- la couche de frettage ayant un allongement à rupture AR au moins égal à 5%,
- la couche de frettage ayant un module d'extension sécant MA au moins égal à 250 daN/mm, pour une force appliquée F égale à 15% de la force à rupture FR de ladite couche de frettage,
- l'armature de travail comprenant une seule couche de travail dont les renforts de travail forment, avec la direction circonférentielle, un angle A_{T} au moins égal à 30° et au plus égal à 50°,
- et les renforts de carcasse de la au moins une couche de carcasse formant, avec la direction circonférentielle et dans le plan équatorial, un angle A_{C2} au moins égal à 55° et au plus égal à 80° et ayant une orientation opposée à celle de l'angle A_{T} des renforts de travail, de façon à ce que les renforts de carcasse et les renforts de travail constituent une triangulation.

Un pneumatique selon l'invention se caractérise par une armature de renforcement, comprenant:
- une armature de frettage, constituée par une seule couche de frettage, la couche de frettage ayant une force à rupture FR minimale spécifiée, exprimée en daN par mm de largeur axiale de couche de frettage, un allongement à rupture AR minimal spécifié, et un module d'extension sécant MA, pour une force appliquée F égale à 15% de la force à rupture FR de ladite couche de frettage, minimal spécifié, ledit module sécant d'extension MA étant le rapport entre 15% de la force à rupture FR et l'allongement correspondant,
- une armature de travail, constituée par une seule couche de travail, dont les renforts de travail métalliques forment, avec la direction circonférentielle, un angle A_{T} au moins égal à 30° et au plus égal à 50°,
- une armature de carcasse, constituée le plus souvent par une seule couche de carcasse, dont les renforts de carcasse forment, avec la direction circonférentielle et dans le plan équatorial, un angle A_{C2} au moins égal à 55° et au plus égal à 80° et ayant une orientation opposée à celle de l'angle des A_{T} des renforts de travail, de façon à ce que les renforts de carcasse et les renforts de travail constituent une triangulation.

Les différences essentielles de l'invention par rapport à un pneumatique de tourisme de l'état de la technique sont donc :
- une armature de frettage à couche de frettage unique ayant à la fois une force à rupture plus élevée, un allongement à rupture plus élevé et une rigidité en extension plus élevée,
- une armature de travail à couche de travail unique, au lieu de deux couches de travail dont les renforts de travail sont croisés d'une couche à l'autre,
- et une armature de carcasse avec une couche de carcasse non radiale dans la portion de sommet, de telle sorte que les renforts de carcasse et les renforts de travail sont croisés les uns par rapport aux autres.

Les inventeurs ont pu constater, de façon surprenante, que l'armature de renforcement selon l'invention, bien que comprenant une couche de travail en moins par rapport à l'état de la technique, c'est-à-dire bien que plus simple et plus légère, garantit une meilleure résistance à la pénétration d'un indenteur. Dans le cas présent, la triangulation entre la couche de travail et la couche de carcasse, associée à une couche de frettage à la fois plus résistante et plus rigide, permet au pneumatique d'absorber plus efficacement l'énergie de déformation imposée par l'objet poinçonnant, avec moins de dégradations de l'armature de renforcement dans la zone de sommet. Plus particulièrement, le choix des caractéristiques physiques de la couche de frettage permet de mieux maitriser le profil déformé du sommet du pneumatique, et par conséquent d'éviter toute déformation excessive pouvant entraîner un endommagement précoce lors du roulage.

Cet avantage a été quantifié par un test de perforation appelé test de « breaking energy », qui est un test normé statique consistant à mesurer l'énergie nécessaire pour perforer un pneumatique monté gonflé sur sa jante par un cylindre métallique appelé polar et ayant un diamètre égal à 19 mm, le pneumatique étant soumis à une charge donnée nominale ou pondérée (surcharge). Une charge nominale est une charge normée définie par la norme de la European Tyre and Rim Technical Organisation ou ETRTO.

De plus, les inventeurs ont également pu constater de façon surprenante que cette armature de renforcement selon l'invention, bien que comprenant une couche de travail en moins par rapport à l'état de la technique, mais cette couche de travail unique étant couplée à une couche de frettage ayant un allongement à rupture au moins égal à 5%, présente des performance en résistance à la fatigue du sommet de même niveau que l'état de la technique, lors d'un roulage sur route sur un sol recouvert de galets. Dans le cas présent, cette architecture de sommet allégée induit des déformations des renforts de frettage localement plus importantes en extension et en compression. La couche de frettage doit par ailleurs avoir des niveaux de rigidité et de force à rupture suffisants pour le tenue du pneumatique aux sollicitations usuelles, d'où la nécessité d'un compromis spécifique entre la force à rupture, l'allongement à rupture et le module d'extension de la couche de frettage.

Cet avantage a été quantifié par des tests très sévères de roulage sur galets. Un parcours de 8000km, à 30km/h, sur une piste recouverte de galets, a été réalisé par un véhicule équipé de 4 pneumatiques de test de dimension 205/55/R16, gonflés à 2.2 bars et soumis à leur charge nominale, au sens de la norme de la European Tyre ans Rim Technical Organisation. A l'issue du roulage, chaque pneumatique a été déchapé, c'est-à-dire que sa bande de roulement a été retirée, et un comptage du nombre de zones de rupture des renforts de frettage a été réalisé.

En ce qui concerne l'armature de carcasse, la couche de carcasse est sensiblement radiale dans au moins une partie des flancs, c'est-à-dire que les renforts de carcasse forment, avec la direction circonférentielle, un angle au moins égal à 85°. Plus précisément, la portion de flanc, concernée préférentiellement par cette orientation radiale de la couche de carcasse, s'étend radialement entre les droites axiales positionnées respectivement à des distances radiales égales à 3H/8 et à H/8 à compter du point le plus radialement extérieur de la bande de roulement du pneumatique.

De préférence la couche de frettage a une force à rupture par mm de largeur axiale de couche de frettage FR au moins égale à 45 daN/mm, ce qui garantit une meilleure résistance à la rupture de la couche de frettage.

Encore préférentiellement la couche de frettage a un allongement à rupture AR au moins égal à 5,5%, ce qui améliore encore la résistance à la fatigue des renforts de frettage.

Egalement préférentiellement la couche de frettage a un module d'extension sécant MA au moins égal à 300 daN/mm, pour une force appliquée F égale à 15% de la force à rupture FR de ladite couche de frettage, ce qui garantit une plus grande rigidité en extension de la couche de frettage.

Avantageusement la couche de frettage a un module d'extension sécant MA au plus égal à 900 daN/mm, pour une force appliquée F égale à 15% de la force à rupture FR de ladite couche de frettage. Ceci garantit un faible nombre de zones de rupture des renforts de frettage lors d'un roulage sévère sur une piste recouverte de galets.

Encore avantageusement la couche de frettage a un module d'extension sécant MA au plus égal à 700 daN/mm, pour une force appliquée F égale à 15% de la force à rupture FR de ladite couche de frettage. Ceci garantit un très faible nombre de zones de rupture des renforts de frettage lors d'un roulage sévère sur une piste recouverte de galets, du niveau de celui observé pour un pneumatique de l'état de la technique comprenant deux couches de travail dont les renforts de travail respectifs sont croisés d'une couche à la suivante.

La couche de frettage comprenant des renforts de frettage ayant un diamètre D et espacés deux à deux d'une distance inter-renforts L, le rapport D/L entre le diamètre D d'un renfort de frettage et la distance L séparant deux renforts de frettage consécutifs est avantageusement au moins égal à 1 et au plus égal à 8. Pour un rapport D/L supérieur à 8, la densité de renforts de frettage est pléthorique par rapport au besoin en terme de résistance mécanique de la couche de frettage et, corrélativement, la quantité de matériau élstomérique interstitiel, compris entre deux renforts de frettage consécutifs, est insuffisante. Pour un rapport D/L inférieur à 1, la couche de frettage est difficile à fabriquer sur des outils industriels productifs de grande largeur.

Préférentiellement, la couche de frettage comprenant des renforts de frettage ayant un diamètre D et espacés deux à deux d'une distance inter-renforts L, le rapport D/L entre le diamètre D d'un renfort de frettage et la distance L séparant deux renforts de frettage consécutifs est au moins égal à 2 et au plus égal à 5. Un rapport D/L compris dans cet intervalle garantit la présence d'une quantité de matériau élastomérique optimale vis-à-vis de la tenue mécanique du matériau élastomérique interstitiel, ce qui implique une robustesse satisfaisante de la couche de frettage.

Selon un premier mode de réalisation relatif au matériau des renforts de frettage, les renforts de frettage comprennent un matériau textile, tel qu'un polyamide aromatique ou aramide, un polyamide aliphatique ou nylon, un polyester tel qu'un polyéthylène-téréphtalate (PET) ou un polyéthylène-naphténate (PEN), une polycétone ou un matériau textile comprenant des fibres cellulosiques telles que la rayonne ou le lyocell. Les renforts de frettage en matériau textile présentent les avantages de la légèreté et de la tenue à l'humidité.

Selon un deuxième mode de réalisation relatif au matériau des renforts de frettage, les renforts de frettage comprennent une combinaison d'au moins deux matériaux textiles distincts. Les renforts de frettage comprenant une combinaison d'au moins deux matériaux textiles distincts, appelés également renforts de frettage hybrides, ont la particularité d'avoir une courbe de traction, représentant l'effort de traction appliqué au renfort en fonction de son allongement, pouvant présenter un premier module d'élasticité en traction relativement faible, aux faibles allongements, et un second module d'élasticité en traction plus élevé, aux forts allongements, d'où l'appellation de renforts à comportement « bi-module ». Le premier module d'élasticité en traction relativement faible contribue à la robustesse de fabrication du pneumatique. Le second module d'élasticité en traction plus élevé répond au besoin de tenue mécanique pour le pneumatique en service.

Dans une variante préférée du deuxième mode de réalisation relatif au matériau des renforts de frettage, les renforts de frettage sont constitués par la combinaison d'un polyamide aromatique ou aramide et d'un polyéthylène-téréphtalate (PET). C'est la combinaison qui a donné les meilleurs résultats en test, vis-à-vis à la fois de la résistance à la perforation et de la résistance à la fatigue sous martèlement du sommet.

Les couches de frettage et de travail ayant respectivement une largeur axiale L_{F} et L_{T}, la couche de frettage a de préférence une largeur axiale L_{F} inférieure à la largeur axiale L_{T} de la couche de travail, préférentiellement lorsque la couche de frettage est radialement extérieure à la couche de travail. La couche de frettage est étroite par rapport à la couche de travail, car sa fonction est de limiter essentiellement les déplacements radiaux du sommet dans la zone du plan équatorial, au centre de la bande de roulement du pneumatique. Cette configuration est particulièrement intéressante lorsque la couche de frettage est radialement extérieure à la couche de travail. Mais, dans le cas où la couche de frettage est radialement intérieure à la couche de travail, la largeur axiale L_{F} de la couche de frettage peut être, le cas échéant, supérieure à la largeur axiale L_{T} de la couche de travail.

Préférentiellement, les renforts de travail de la couche de travail forment, avec la direction circonférentielle, un angle A_{T} au moins égal à 35° et au plus égal à 45°. Cet intervalle de valeurs angulaires correspond à l'optimum pour garantir une rigidité de dérive du pneumatique suffisante, nécessaire au bon comportement du pneumatique en roulage virageux. La rigidité de dérive d'un pneumatique correspond à l'effort axial à appliquer au pneumatique générant une rotation de 1° autour d'une direction radiale.

Encore préférentiellement, les renforts de carcasse de la au moins une couche de carcasse forment, avec la direction circonférentielle et dans le plan équatorial (XZ), un angle A_{C2} au moins égal à 60° et au plus égal à 70°. Cet intervalle de valeurs angulaires résulte de la conformation du pneumatique au cours de sa fabrication. Les renforts de la couche de carcasse sont initialement radiaux, c'est-à-dire forment un angle proche de 90° avec la direction circonférentielle. Lors de la conformation du pneumatique en fabrication, c'est-à-dire lors du passage d'une forme cylindrique à une forme torique, l'angle des renforts de carcasse diminue sensiblement dans la zone de sommet du pneumatique, et en particulier au voisinage du plan équatorial.

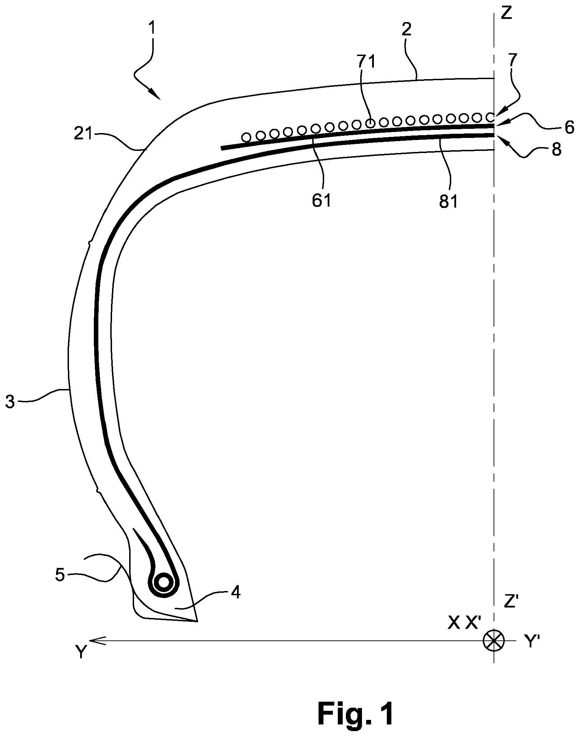

Dans ce qui suit, l'invention est décrite à l'aide des figures 1 à 3 en annexe, et des exemples décrits dans les tableaux 1 à 5, donnés à titre d'illustration.

La figure 1 présente, de manière schématique, la coupe d'un demi-pneumatique selon l'invention dans un plan radial. Comme le montre la figure 1, le pneumatique 1 selon l'invention comprend une bande de roulement 2, destinée à entrer en contact avec un sol et reliée, au niveau de ses extrémités axiales 21, radialement vers l'intérieur, par deux flancs 3 à deux bourrelets 4, destinés à entrer en contact avec une jante 5. L'armature de travail 6, radialement intérieure à la bande de roulement 2, comprend une couche de travail 61 comprenant des renforts de travail métalliques (non représentés) enrobés dans un matériau élastomérique, lesdits renforts de travail formant, avec la direction circonférentielle YY' du pneumatique, un angle A_{T} au moins égal à 10°. L'armature de frettage 7, radialement intérieure à la bande de roulement 2 et radialement extérieure à l'armature de travail 6, comprend une seule couche de frettage 71 comprenant des renforts de frettage enrobés dans un matériau élastomérique, lesdits renforts de frettage formant, avec la direction circonférentielle YY', un angle A_{F} au plus égal à 5°. L'armature de carcasse 8, reliant les deux bourrelets 4 entre eux, radialement intérieure à l'armature de travail 6 et à l'armature de frettage 7, comprend au moins une couche de carcasse 81 comprenant des renforts de carcasse textiles (non représentés) enrobés dans un matériau élastomérique, lesdits renforts de carcasse formant, avec la direction circonférentielle YY', au moins en partie dans les flancs 3, un angle A_{C2} au moins égal à 85°.

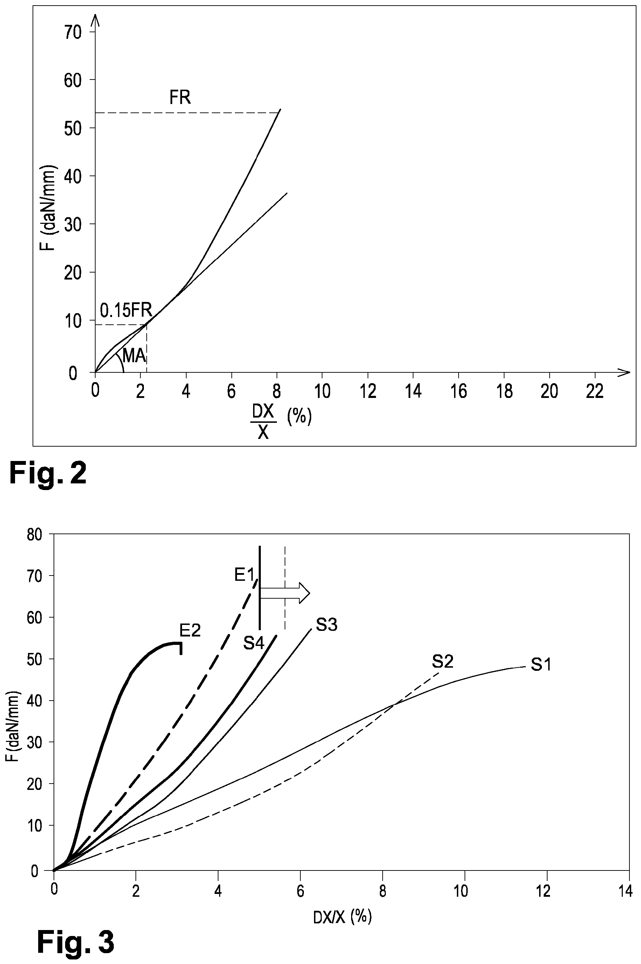

La figure 2 présente une courbe de comportement type d'une couche de frettage, représentant la force d'extension F appliquée à la couche de frettage, exprimée en daN/mm c'est-à-dire en daN par mm de largeur axiale de couche de frettage, en fonction de sa déformation en extension DX/X. Sur la figure 2, sont en particulier indiqués la force à rupture FR de la couche de frettage et le module d'extension sécant MA, mesuré à une force F égale à 0.15 fois la force à rupture FR et caractérisant de façon normative la rigidité d'extension de la couche de frettage.

La figure 3 présente différentes courbes de comportement en traction d'une couche de frettage, montrant la variation de la force d'extension par mm de largeur axiale de couche de frettage F, exprimée en daN/mm, en fonction de sa déformation en extension DX/X, pour divers types de renforts de frettage.

Les courbes de la figure 3 ont été établies pour une couche de frettage d'un pneumatique de tourisme de dimension 205/55 R 16, destiné à être monté sur une jante 6,5J16 et à être gonflé à une pression nominale de 2.5 bars en « normal load » et 2.9 bars en « extra load », selon la norme ETRTO (European Tyre and Rim Technical Organisation). La courbe S1 est la courbe de traction d'une couche de frettage dont les renforts de frettage sont constitués par 3 brins en PET de 440 tex (440/3) avec une torsion équilibrée de 160 tours par m (160 tpm), le pas P des renforts étant égal à 1.31 mm. La courbe S2 est la courbe de traction d'une couche de frettage dont les renforts de frettage sont de type hybride et constitués par la combinaison d'un PET de 334 tex et un aramide de 330 tex, retordus ensemble avec une torsion équilibrée de 270 tours par mètre (270 tpm), le pas P des renforts étant égal à 0.8 mm. La courbe S3 est la courbe de traction d'une couche de frettage dont les renforts de frettage sont de type hybride et constitués par la combinaison d'un PET de 334 tex et un aramide de 330 tex, retordus ensemble avec une torsion équilibrée de 210 tours par mètre (210 tpm), le pas P des renforts étant égal à 1.23 mm. La courbe S4 est la courbe de traction d'une couche de frettage dont les renforts de frettage sont constitués par 2 brins en aramide de 167 tex (167/2) avec une torsion de 440 tours par m (440 tpm), le pas P des renforts étant égal à 0.87 mm. La courbe E1 est la courbe de traction d'une couche de frettage dont les renforts de frettage sont constitués par 2 brins en aramide de 167 tex (167/2) avec une torsion de 315 tours par m (315 tpm), le pas P des renforts étant égal à 0.87 mm. La courbe E2 est la courbe de traction d'une couche de frettage dont les renforts de frettage sont constitués par des câbles métalliques en acier constitués par un assemblage de 3 fils métalliques de diamètre 0.26 mm, le pas P des renforts étant égal à 0.85 mm. Le segment avec une flèche de la figure 3 indique l'allongement à rupture minimal spécifié de 5%, au-delà duquel doit être positionné l'allongement à rupture de toute couche de frettage entrant dans le cadre de l'invention. Les courbes S1, S2, S3 et S4 correspondent à des couches de frettage entrant dans le cadre de l'invention, alors que les courbes E1 et E2 correspondent à des exemples comparatifs n'entrant pas dans le cadre de l'invention.

L'invention a été plus particulièrement étudiée pour un pneumatique de tourisme de dimension 205/55 R 16, destiné à être monté sur une jante 6,5J16 et à être gonflé à une pression nominale de 2.5 bars en « normal load » et 2.9 bars en « extra load », selon la norme ETRTO (European Tyre and Rim Technical Organisation). Une comparaison a été effectuée entre quatre variantes de réalisation de l'invention S1, S2, S3, S4 et deux exemples comparatifs E1 et E2 n'entrant pas dans le cadre de l'invention.

Le tableau 1 ci-dessous présente les caractéristiques des couches de frettage de des deux exemples comparatifs E1 et E2 n'entrant pas dans le cadre de l'invention et des quatre variantes de réalisation de l'invention S1, S2, S3, S4, pour un pneumatique de dimension 205/55R16:

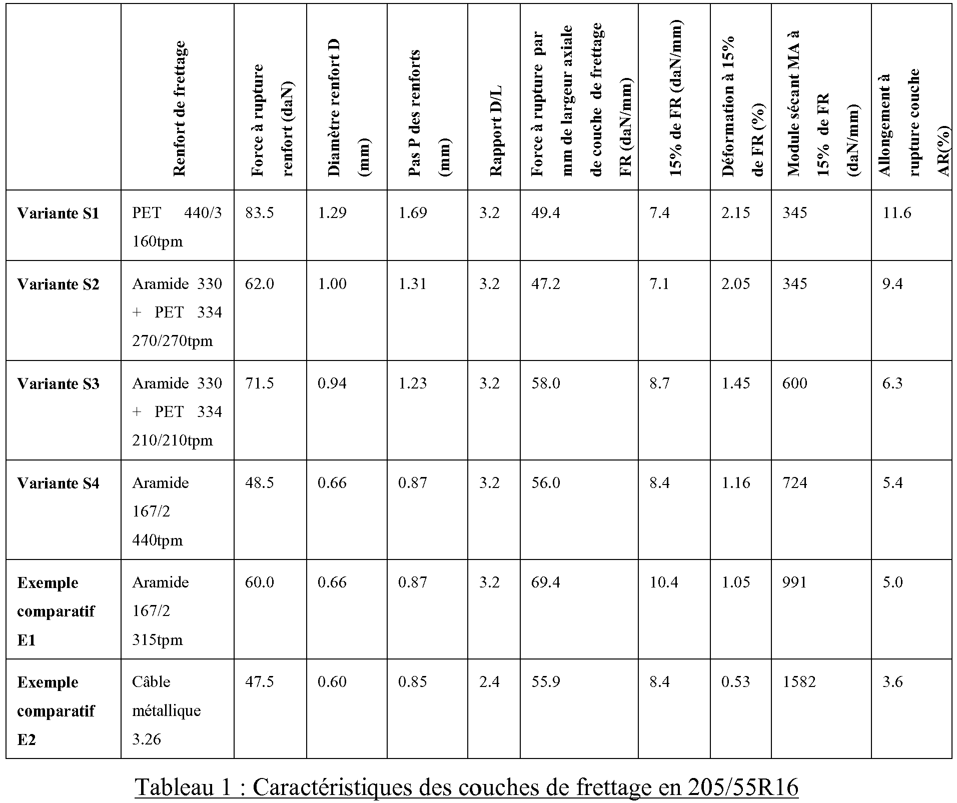

Il est à noter que la distance inter-renforts L de la formule D/L est égale à la différence entre le pas P entre les renforts, mesuré entre les axes de deux renforts consécutifs, et le diamètre D d'un renfort. Ce rapport est égal à 3.2 dans tous les cas étudiés, sauf pour l'exemple comparatif E2 où il est égal à 2.4.

Selon le tableau 1, les forces à rupture par mm de largeur axiale de couche de frettage FR des couches de frettage sont respectivement égales à 69.4 daN/mm et 55.9 daN/mm, pour les exemples comparatifs E1 et E2 hors invention, et respectivement égales à 49.4 daN/mm, 47.2 daN/mm, 58 daN/mm et 56 daN/mm pour les variantes de réalisation S1, S2, S3, S4, donc elles sont toutes supérieures à la force à rupture minimale spécifiée 35 daN/mm, et même supérieures à la valeur préférentielle de la force à rupture minimale spécifiée 45 daN/mm. Les allongements à rupture AR des couches de frettage sont respectivement égaux à 5% et 3.6%, pour les exemples comparatifs E1 et E2 hors invention, et respectivement égaux à 11.8% , 9.4%, 6.3% et 5.4% pour les variantes de réalisation S1, S2, S3, S4, donc seules les variantes de réalisation S1, S2, S3, S4 ont des déformations à rupture au moins égales à la valeur préférentielle d'allongement à rupture spécifiée de 5.5%. Enfin, les modules sécants en extension à 15% de la force à rupture de couche de frettage FR sont respectivement égaux à 991 daN/mm et 1582 daN/mm, pour les exemples comparatifs E1 et E2 hors invention, et respectivement à 345 daN/mm, 606 daN/mm, 600 daN/mm et 724 daN/mm pour les variantes de réalisation S1, S2, S3, S4., donc seules les variantes de réalisation S1, S2, S3, S4 ont des modules sécants compris entre les valeurs préférentielles spécifiées du module sécant en extension à 15% de la force à rupture de 300 daN/mm et 900 daN/mm.

Le tableau 2 ci-dessous présente les types de renforts et les angles, formés par lesdits renforts, pour les armatures de carcasse, de travail et de frettage, pour un pneumatique de tourisme de dimension 205/55R16, pour les deux exemples comparatifs E1 et E2 n'entrant pas dans le cadre de l'invention et les quatre variantes de réalisation de l'invention S1, S2, S3, S4:

**Tableau 2 : Types et angles des renforts des armatures de carcasse, de travail et de frettage en 205/55R16**

| | **Type de renfort de carcasse** | **Angle A_{C2} dans le plan équatorial (°)** | **Type de renfort de travail** | **Angle A_{T} dans le plan équatorial (°)** | **Type de renfort de frettage** | **Angle A_{F} dans le plan équatorial (°)** |
|---|---|---|---|---|---|---|
| **Référence de l'état de la technique R** | PET 144/2290tpm | 90 | Acier 2.30 P=1.2mm | +/-25 | Nylon N140/2250/250tpm | 0 |
| **Variante S1** | PET 144/2290tpm | 67 | Acier 2.30 P=0.9mm | -40 | PET 440/3160tpm | 0 |
| **Variante S2** | PET 144/2290tpm | 67 | Acier 2.30 P=0.9mm | -40 | Aramide 330 + PET 334 270/270tpm | 0 |
| **Variante S3** | PET 144/2290tpm | 67 | Acier 2.30 P=0.9mm | -40 | Aramide 330 + PET 334 210/210tpm | 0 |
| **Variante S4** | PET 144/2290tpm | 67 | Acier 2.30 P=0.9mm | -40 | Aramide 167/2440tpm | 0 |
| **Exemple comparatif E1** | PET 144/2290tpm | 67 | Acier 2.30 P=0.9mm | -40 | Aramide 167/2315tpm | 0 |
| **Exemple comparatif E2** | PET 144/2290tpm | 67 | Acier 2.30 P=0.9mm | -40 | Câble métallique 3.26 | 0 |

Selon le tableau 2, l'armature de carcasse, dans toutes les configurations, est constituée par une couche de carcasse unique dont les renforts de carcasse sont constitués par 2 brins en PET de 144 tex (144/2) avec une torsion de 290 tours par m (290 tpm). Pour la référence de l'état de la technique R, les renforts de carcasse de la couche de carcasse forment, avec la direction circonférentielle et dans le plan équatorial, un angle A_{C2} égal à 90°. Pour toutes les autres configurations, les renforts de carcasse de la couche de carcasse forment, avec la direction circonférentielle et dans le plan équatorial, un angle A_{C2} égal à 67°.

L'armature de travail, pour la référence de l'état de la technique, est constituée par deux couches de travail dont les renforts de travail sont des câbles métalliques, en acier contenant 0.7% de carbone, constitués par 2 fils ayant un diamètre égal à 0.30 mm, et posés à un pas P égal à 1.2 mm, lesdits renforts de travail formant, avec la direction circonférentielle, un angle égal à 25° et croisés d'une couche de travail à la suivante. L'armature de travail, pour toutes les autres configurations étudiées, est constituée par une couche de travail unique dont les renforts de travail sont des câbles métalliques, en acier contenant 0.7% de carbone, constitués par 2 fils ayant un diamètre égal à 0.30 mm, et posés à un pas P égal à 0.9 mm, lesdits renforts de travail formant, avec la direction circonférentielle, un angle égal à -40°.

Le tableau 3 ci-après présente des résultats théoriques relatifs aux rigidités radiales Rxx et de cisaillement Gxy, issus de calculs analytiques, ainsi que des pressions d'éclatement théoriques, pour un pneumatique de dimension 205/55R16:

**Tableau 3 : Rigidités et pressions d'éclatement calculées en 205/55R16**

| | **Rigidité radiale Rxx en valeur relative (%)** | **Rigidité de cisaillement Gxy en valeur relative (%)** | **Pression d'éclatement en valeur relative (%)** |
|---|---|---|---|
| **Référence de l'état de la technique R** | 100 | 100 | 100 |
| **Variante S1** | 80 | 14 | 82 |
| **Variante S2** | 52 | 13 | 76 |
| **Variante S3** | 82 | 14 | 91 |
| **Variante S4** | 90 | 15 | 90 |
| **Exemple comparatif E1** | 113 | 15 | 110 |
| **Exemple comparatif E2** | 1001 | 18 | 85 |

La rigidité radiale Rxx, exprimée en daN/mm, est la force radiale à appliquer au pneumatique pour obtenir un déplacement radial de son sommet égal à 1mm. La rigidité de cisaillement Gxy, exprimée en daN/mm, est la force axiale à appliquer au pneumatique pour obtenir un déplacement axial de son sommet égal à 1mm. La pression d'éclatement théorique du pneumatique, exprimée en bars, est une caractéristique de résistance à la pression du pneumatique. Les caractéristiques de rigidité radiale Rxx et de rigidité de cisaillement Gxy, ainsi que la pression d'éclatement sont exprimées en valeur relative par rapport aux caractéristiques correspondantes de la référence de l'état de la technique R, prises comme base 100.

Selon le tableau 3, les variantes S1, S3 et S4 présentent des valeurs de rigidité radiale Rxx et de pression d'éclatement proches des valeurs obtenues pour la référence de l'état de la technique R. Par contre les rigidités de cisaillement Gxy sont très inférieures à de la référence R, ce qui est normal compte tenu du fait que l'armature de travail ne comprend qu'une seule couche de travail.

Le tableau 4 ci-après présente des résultats de mesures et de tests relatifs aux diverses architectures de pneumatique étudiées, pour un pneumatique de dimension 205/55 R 16 :

**Tableau 4 : Rigidités de dérive, Breaking Energy et pressions d'éclatement mesurées en 205/55R16**

| | **Rigidité de dérive en valeur relative (%)** | **Breaking energy (J) pour une pression de gonflage 2.2 bars** | **Pression d'éclatement du pneumatique gonflé à l'eau (bars)** |
|---|---|---|---|
| **Référence de l'état de la technique R** | 100 | >588 J | >16 bars |
| **Variante S1** | 98 | >588 J | >16 bars |
| **Variante S2** | | >588 J | >16 bars |
| **Variante S3** | 110 | >588 J | >16 bars |
| **Variante S4** | | >588 J | >16 bars |
| **Exemple comparatif E1** | 110 | >588 J | >16 bars |
| **Exemple comparatif E2** | 107 | >588 J | >16 bars |

La rigidité de dérive Dz d'un pneumatique est la force axiale appliquée au pneumatique pour obtenir une rotation de 1° du pneumatique autour d'une direction radiale. Dans le tableau 4, la rigidité de dérive est exprimée en valeur relative, c'est-à-dire en pourcentage de la référence de l'état de la technique prise comme base 100, pour un pneumatique de dimension 205/55R16, soumis à une charge égale à 0.8 fois sa charge nominale, au sens de la norme ETRTO, ladite charge nominale étant égale à 4826 N.

L'énergie de perforation ou breaking energy est mesurée par indentation par un obstacle cylindrique ou polar ayant un diamètre de 19 mm, le pneumatique étant gonflé à une pression égale à 2.2 bar (condition extraload). Au cours de ce test, l'énergie est mesurée au moment de la perforation du sommet par le polar et est comparée à une valeur seuil minimale. Pour un pneumatique de cette dimension, la valeur seuil minimale, devant être respectée pour satisfaire l'exigence de la norme dite « Extraload », est égale à 588 J.

Le test de pression d'éclatement du pneumatique est réalisé sur un pneumatique gonflé à l'eau. La valeur seuil minimale retenue pour garantir une résistance à la pression du pneumatique avec un niveau de sécurité satisfaisant est prise égale à 16 bars.

Selon le tableau 4, par rapport aux résultats obtenus pour la référence R, les variantes d'invention S1 et S3 ainsi que les exemples comparatifs E1 et E2 présentent une rigidité de dérive Dz du même niveau que la référence (entre 98% et 110%). De plus toutes les configurations testées ont une valeur en breaking energy supérieure à la valeur seuil minimale de 588 J et une pression d'éclatement supérieure à la valeur seuil minimale de 16 bars. Il est à noter que ces résultats sont obtenus pour des structures de pneumatique allégées, ne comprenant qu'une seule couche de travail au lieu de deux couches de travail croisées l'une par rapport à l'autre pour la référence R.

Le tableau 5 ci-après présente les résultats des tests de roulage sur galets, visant à quantifier la tenue en fatigue des renforts de frettage dans des conditions de martèlement sévères de la bande de roulement. Plus précisément, pour chaque configuration testée, le nombre de zones de rupture de la couche de frettage est compté, après déchapage du pneumatique. Le tableau 5, pour la couche de frettage de chacune des configurations testées, rappelle le module d'extension sécant MA, pour une force appliquée F égale à 15% de la force à rupture FR, l'allongement à rupture AR et présente le nombre de zones de rupture correspondant, pour un pneumatique de dimension 205/55R16.

**Tableau 5 : Nombre de zones de rupture de la couche de frettage, après test de roulage sur galets, en 205/55R16**

| | **Module d'extension sécant MA à 15%FR (daN/mm)** | **Allongement à rupture AR (%)** | **Nombres de zones de rupture de la couche de frettage, après test de roulage sur galets** |
|---|---|---|---|
| **Référence de l'état de la technique R** | - | - | 10 |
| **Variante S1** | 345 | 11.60 | 0 |
| **Variante S2** | 606 | 9.40 | 0 |
| **Variante S3** | 600 | 6.26 | 2 |
| **Variante S4** | 724 | 5.39 | 29 |
| **Exemple comparatif E1** | 991 | 4.96 | 49 |
| **Exemple comparatif E2** | 1582 | 3.60 | 120 |

D'après le tableau 5, la référence de l'état de la technique R présente 10 zones de rupture de la couche de frettage. Les meilleures configurations vis-à-vis du test de roulage sur galets, sont les variantes de réalisation S1, S2 et S3, puisque le nombre de zones de rupture de la couche de frettage est nul ou quasi nul. Ces 3 variantes de réalisation S1, S2 et S3 ont en commun un module d'extension sécant MA, pour une force appliquée F égale à 15% de la force à rupture FR, compris entre 300 daN/mm et 700 daN/mm, et un allongement à rupture AR supérieur à 5.5%. La variante de réalisation S4, avec un module d'extension sécant MA, pour une force appliquée F égale à 15% de la force à rupture FR, compris entre 700 daN/mm et 900 daN/mm et un allongement à rupture AR compris entre 5% et 5.5%, est moins performante que les précédentes, car son nombre de zones de rupture de la couche de frettage s'élève à 29. Enfin les exemples comparatifs E1 et E2, avec un module d'extension sécant MA, pour une force appliquée F égale à 15% de la force à rupture FR, supérieur à 900 daN/mm et un allongement à rupture AR inférieur 5%, présentent un nombre de zones de rupture de la couche de frettage respectivement égal à 49 et à 120, ce qui est une performance sensiblement dégradée par rapport à l'état de la technique R.

Dans le domaine des pneumatiques de tourisme, l'invention n'est pas limitée aux renforts de carcasse et aux renforts de travail précédemment décrits. Les renforts de carcasse peuvent être en tout type de matériau textile, tels que, par exemple et de façon non exhaustive, le PET, l'aramide, le nylon ou toute combinaison de ces matériaux. Les renforts de travail sont des câbles métalliques pouvant être des assemblages divers, tels que, par exemple et de façon non exhaustive, des câbles de formule 3.26 (assemblage de 3 fils de 0.26 mm de diamètre), 3.18 (assemblage de 3 fils de 0.18 mm de diamètre), 2.30 (assemblage de 2 fils de 0.30 mm de diamètre, avec un pas d'hélice de 14 mm) ou des mono-filaments de diamètre 0.40 mm.

## Revendications

1. Pneumatique (1) pour véhicule de tourisme comprenant :
- une bande de roulement (2), destinée à entrer en contact avec un sol et reliée, au niveau de ses extrémités axiales (21), radialement vers l'intérieur, par deux flancs (3) à deux bourrelets (4), destinés à entrer en contact avec une jante (5),
- une armature de travail (6), radialement intérieure à la bande de roulement (2) et comprenant une seule couche de travail (61) comprenant des renforts de travail métalliques enrobés dans un matériau élastomérique, lesdits renforts de travail formant, avec une direction circonférentielle (YY') du pneumatique, un angle A_{T} au moins égal à 30° et au plus égale à 50°,
- une armature de frettage (7), radialement intérieure à la bande de roulement (2) et radialement adjacente à l'armature de travail (6), et comprenant une seule couche de frettage (71) comprenant des renforts de frettage enrobés dans un matériau élastomérique, lesdits renforts de frettage formant, avec la direction circonférentielle (YY'), un angle **A_{F}** au plus égal à 5°,
- une armature de carcasse (8), reliant les deux bourrelets (4) entre eux, radialement intérieure à l'armature de travail (6) et à l'armature de frettage (7), et comprenant au moins une couche de carcasse (81) comprenant des renforts de carcasse textiles enrobés dans un matériau élastomérique, lesdits renforts de carcasse formant, avec la direction circonférentielle (YY'), au moins en partie dans les flancs (3), un angle A_{C1} au moins égal à 85°,
**caractérisé en ce que** la couche de frettage (71) a une force à rupture par mm de largeur axiale de couche de frettage FR au moins égale à 35 daN/mm, **en ce que** la couche de frettage (71) a un allongement à rupture AR au moins égal à 5%, **en ce que** la couche de frettage (71) a un module d'extension sécant MA au moins égal à 250 daN/mm, pour une force appliquée F égale à 15% de la force à rupture FR de ladite couche de frettage (71), **et en ce que** les renforts de carcasse de la au moins une couche de carcasse (81) forment, avec la direction circonférentielle (YY') et dans le plan équatorial (XZ), un angle A_{C2} au moins égal à 55° et au plus égal à 80° et ayant une orientation opposée à celle de l'angle A_{T} des renforts de travail, de façon à ce que les renforts de carcasse et les renforts de travail constituent une triangulation.

2. Pneumatique selon la revendication 1, **dans lequel** la couche de frettage (71) a une force à rupture par mm de largeur axiale de couche de frettage FR au moins égale à 45 daN/mm.

3. Pneumatique selon l'une des revendications 1 ou 2, **dans lequel** la couche de frettage (71) a un allongement à rupture AR au moins égal à 5,5%.

4. Pneumatique selon l'une quelconque des revendications 1 à 3, **dans lequel** la couche de frettage (71) a un module d'extension sécant MA au moins égal à 300 daN/mm, pour une force appliquée F égale à 15% de la force à rupture FR de ladite couche de frettage (71).

5. Pneumatique selon l'une quelconque des revendications 1 à 4, **dans lequel** la couche de frettage (71) a un module d'extension sécant MA au plus égal à 900 daN/mm, pour une force appliquée F égale à 15% de la force à rupture FR de ladite couche de frettage (71).

6. Pneumatique selon l'une quelconque des revendications 1 à 5, **dans lequel** la couche de frettage (71) a un module d'extension sécant MA au plus égal à 700 daN/mm, pour une force appliquée F égale à 15% de la force à rupture FR de ladite couche de frettage (71).

7. Pneumatique selon l'une quelconque des revendications 1 à 6, la couche de frettage (71) comprenant des renforts de frettage ayant un diamètre D et espacés deux à deux d'une distance inter-renforts L, **dans lequel** le rapport D/L entre le diamètre D d'un renfort de frettage et la distance L séparant deux renforts de frettage consécutifs est au moins égal à 1 et au plus égal à 8.

8. Pneumatique selon l'une quelconque des revendications 1 à 7, la couche de frettage (71) comprenant des renforts de frettage ayant un diamètre D et espacés deux à deux d'une distance inter-renforts L, **dans lequel** le rapport D/L entre le diamètre D d'un renfort de frettage et la distance L séparant deux renforts de frettage consécutifs est au moins égal à 2 et au plus égal à 5.

9. Pneumatique selon l'une quelconque des revendications 1 à 8, **dans lequel** les renforts de frettage comprennent un matériau textile, tel qu'un polyamide aromatique ou aramide, un polyamide aliphatique ou nylon, un polyester tel qu'un polyéthylène-téréphtalate (PET) ou un polyéthylène-naphténate (PEN), une polycétone ou un matériau textile comprenant des fibres cellulosiques telles que la rayonne ou le lyocell.

10. Pneumatique selon la revendication 9, **dans lequel** les renforts de frettage comprennent une combinaison d'au moins deux matériaux textiles distincts.

11. Pneumatique selon la revendication 10, **dans lequel** les renforts de frettage sont constitués par la combinaison d'un polyamide aromatique ou aramide et d'un polyéthylène-téréphtalate (PET).

12. Pneumatique selon l'une quelconque des revendications 1 à 11, les couches de frettage (71) et de travail (61) ayant respectivement une largeur axiale L_{F} et L_{T}, **dans lequel** la couche de frettage (71) a une largeur axiale L_{F} inférieure à la largeur axiale L_{T} de la couche de travail (61), préférentiellement lorsque la couche de frettage (71) est radialement extérieure à la couche de travail (61).

13. Pneumatique selon l'une quelconque des revendications 1 à 12, **dans lequel** les renforts de travail de la couche de travail (61) forment, avec la direction circonférentielle (YY'), un angle A_{T} au moins égal à 35° et au plus égal à 45°.

14. Pneumatique selon l'une quelconque des revendications 1 à 13, **dans lequel** les renforts de carcasse de la au moins une couche de carcasse (81) forment, avec la direction circonférentielle (YY') et dans le plan équatorial (XZ), un angle A_{C2} au moins égal à 60° et au plus égal à 70°.

## Patentansprüche

1. Reifen (1) für einen Personenkraftwagen, umfassend:
- einen Laufstreifen (2), der dazu bestimmt ist, mit einem Boden in Kontakt zu kommen, und an seinen axialen Enden (21), radial nach innen, über zwei Seitenwände (3) mit zwei Wülsten (4) verbunden ist, die dazu bestimmt sind, mit einer Felge (5) in Kontakt zu kommen,
- eine Arbeitsbewehrung (6), die sich radial innerhalb des Laufstreifens (2) befindet und eine einzige Arbeitslage (61) umfasst, welche metallische Arbeitslagenverstärkungen umfasst, die in ein Elastomermaterial eingebettet sind, wobei die Arbeitslagenverstärkungen mit einer Umfangsrichtung (YY') des Reifens einen Winkel A_{T} bilden, der mindestens gleich 30° und höchstens gleich 50° ist,
- eine Umhüllungsbewehrung (7), die sich radial innerhalb des Laufstreifens (2) befindet und der Arbeitsbewehrung (6) benachbart ist und eine einzige Umhüllungslage (71) umfasst, welche Umhüllungsverstärkungen umfasst, die in ein Elastomermaterial eingebettet sind, wobei die Umhüllungsverstärkungen mit der Umfangsrichtung (YY') einen Winkel A_{F} bilden, der höchstens gleich 5° ist,
- eine Karkassenbewehrung (8), welche die zwei Wülste (4) miteinander verbindet, sich radial innerhalb der Arbeitsbewehrung (6) und der Umhüllungsbewehrung (7) befindet und mindestens eine Karkassenlage (81) umfasst, welche textile Karkassenverstärkungen umfasst, die in ein Elastomermaterial eingebettet sind, wobei die Karkassenverstärkungen mit der Umfangsrichtung (YY'), wenigstens teilweise in den Seitenwänden (3), einen Winkel A_{C1} bilden, der mindestens gleich 85° ist,
**dadurch gekennzeichnet, dass** die Umhüllungslage (71) eine Reißkraft pro mm der axialen Breite der Umhüllungslage FR aufweist, die mindestens gleich 35 daN/mm ist, dadurch, dass die Umhüllungslage (71) eine Bruchdehnung AR aufweist, die mindestens gleich 5 % ist, dadurch, dass die Umhüllungslage (71) einen Sekantendehnungsmodul MA aufweist, der mindestens gleich 250 daN/mm ist, für eine ausgeübte Kraft F, die gleich 15 % der Reißkraft FR der Umhüllungslage (71) ist, und dadurch, dass die Karkassenverstärkungen der mindestens einen Karkassenlage (81) mit der Umfangsrichtung (YY') und in der Äquatorialebene (XZ) einen Winkel A_{C2} bilden, der mindestens gleich 55° und höchstens gleich 80° ist und eine Ausrichtung aufweist, die zu derjenigen des Winkels A_{T} der Arbeitslagenverstärkungen entgegengesetzt ist, derart, dass die Karkassenverstärkungen und die Arbeitslagenverstärkungen einen Dreiecksverband bilden.

2. Reifen nach Anspruch 1, wobei die Umhüllungslage (71) eine Reißkraft pro mm der axialen Breite der Umhüllungslage FR aufweist, die mindestens gleich 45 daN/mm ist.

3. Reifen nach einem der Ansprüche 1 oder 2, wobei die Umhüllungslage (71) eine Bruchdehnung AR aufweist, die mindestens gleich 5,5 % ist.

4. Reifen nach einem der Ansprüche 1 bis 3, wobei die Umhüllungslage (71) einen Sekantendehnungsmodul MA aufweist, der mindestens gleich 300 daN/mm ist, für eine ausgeübte Kraft F, die gleich 15 % der Reißkraft FR der Umhüllungslage (71) ist.

5. Reifen nach einem der Ansprüche 1 bis 4, wobei die Umhüllungslage (71) einen Sekantendehnungsmodul MA aufweist, der höchstens gleich 900 daN/mm ist, für eine ausgeübte Kraft F, die gleich 15 % der Reißkraft FR der Umhüllungslage (71) ist.

6. Reifen nach einem der Ansprüche 1 bis 5, wobei die Umhüllungslage (71) einen Sekantendehnungsmodul MA aufweist, der höchstens gleich 700 daN/mm ist, für eine ausgeübte Kraft F, die gleich 15 % der Reißkraft FR der Umhüllungslage (71) ist.

7. Reifen nach einem der Ansprüche 1 bis 6, wobei die Umhüllungslage (71) Umhüllungsverstärkungen umfasst, die einen Durchmesser D aufweisen und paarweise um einen Abstand zwischen den Verstärkungen L beabstandet sind, wobei das Verhältnis D/L zwischen dem Durchmesser D einer Umhüllungsverstärkung und dem Abstand L, der zwei aufeinander folgende Umhüllungsverstärkungen trennt, mindestens gleich 1 und höchstens gleich 8 ist.

8. Reifen nach einem der Ansprüche 1 bis 7, wobei die Umhüllungslage (71) Umhüllungsverstärkungen umfasst, die einen Durchmesser D aufweisen und paarweise um einen Abstand zwischen den Verstärkungen L beabstandet sind, wobei das Verhältnis D/L zwischen dem Durchmesser D einer Umhüllungsverstärkung und dem Abstand L, der zwei aufeinander folgende Umhüllungsverstärkungen trennt, mindestens gleich 2 und höchstens gleich 5 ist.

9. Reifen nach einem der Ansprüche 1 bis 8, wobei die Umhüllungsverstärkungen ein textiles Material umfassen, wie etwa ein aromatisches Polyamid oder ein Aramid, ein aliphatisches Polyamid oder Nylon, ein Polyester wie etwa ein Polyethylenterephthalat (PET) oder ein Polyethylennaphtenat (PEN), ein Polyketon oder ein textiles Material, das Cellulosefasern umfasst, wie Kunstseide oder Lyocell.

10. Reifen nach Anspruch 9, wobei die Umhüllungsverstärkungen eine Kombination von wenigstens zwei verschiedenen textilen Materialien umfassen.

11. Reifen nach Anspruch 10, wobei die Umhüllungsverstärkungen aus der Kombination eines aromatischen Polyamids oder Aramids und eines Polyethylenterephthalats (PET) bestehen.

12. Reifen nach einem der Ansprüche 1 bis 11, wobei die Umhüllungslagen (71) und Arbeitslagen (61) eine axiale Breite L_{F} bzw. L_{T} aufweisen, wobei die Umhüllungslage (71) eine axiale Breite L_{F} aufweist, die kleiner als die axiale Breite L_{T} der Arbeitslage (61) ist, vorzugsweise wenn sich die Umhüllungslage (71) radial außerhalb der Arbeitslage (61) befindet.

13. Reifen nach einem der Ansprüche 1 bis 12, wobei die Arbeitslagenverstärkungen der Arbeitslage (61) mit der Umfangsrichtung (YY') einen Winkel A_{T} bilden, der mindestens gleich 35° und höchstens gleich 45° ist.

14. Reifen nach einem der Ansprüche 1 bis 13, wobei die Karkassenverstärkungen der mindestens einen Karkassenlage (81) mit der Umfangsrichtung (YY') und in der Äquatorialebene (XZ) einen Winkel A_{C2} bilden, der mindestens gleich 60° und höchstens gleich 70° ist.

## Claims

1. Tyre (1) for a passenger vehicle, comprising:
- a tread (2) intended to come into contact with the ground and connected, at its axial ends (21), radially towards the inside, via two sidewalls (3), to two beads (4) intended to come into contact with a rim (5),
- a working reinforcement (6), radially on the inside of the tread (2), and comprising a single working layer (61) comprising metal working reinforcers coated in an elastomeric material, the said working reinforcers forming, with a circumferential direction (YY') of the tyre, an angle A_{T} at least equal to 30° and at most equal to 50°,
- a hoop reinforcement (7), radially on the inside of the tread (2), and radially adjacent to the working reinforcement (6), and comprising a single hooping layer (71) comprising hoop reinforcers coated in an elastomeric material, the said hoop reinforcers forming, with the circumferential direction (YY'), an angle A_{F} at most equal to 5°,
- a carcass reinforcement (8), joining the two beads (4) together, radially on the inside of the working reinforcement (6) and of the hoop reinforcement (7), and comprising at least one carcass layer (81) comprising textile carcass reinforcers coated in an elastomeric material, the said carcass reinforcers forming, with the circumferential direction (YY'), at least partially in the sidewalls (3), an angle A_{C1} at least equal to 85°,
**characterized in that** the hooping layer (71) has a force at break per mm of axial width of the hooping layer FR at least equal to 35 daN/mm, **in that** the hooping layer (71) has an elongation at break AR at least equal to 5%, **in that** the hooping layer (71) has a secant extension modulus MA at least equal to 250 daN/mm, for an applied force F equal to 15% of the force at break FR of the said hooping layer (71), **and in that** the carcass reinforcers of the at least one carcass layer (81) form, with the circumferential direction (YY') and in the equatorial plane (XZ), an angle A_{C2} at least equal to 55° and at most equal to 80° and having an orientation the opposite of that of the angle A_{T} of the working reinforcers so that the carcass reinforcers and the working reinforcers constitute a triangulation.

2. Tyre according to Claim 1, **in which** the hooping layer (71) has a force at break per mm of axial width of the hooping layer FR at least equal to 45 daN/mm.

3. Tyre according to either of Claims 1 and 2, **in which** the hooping layer (71) has an elongation at break AR at least equal to 5.5%.

4. Tyre according to any one of Claims 1 to 3, **in which** the hooping layer (71) has a secant extension modulus MA at least equal to 300 daN/mm, for an applied force F equal to 15% of the force at break FR of the said hooping layer (71).

5. Tyre according to any one of Claims 1 to 4, **in which** the hooping layer (71) has a secant extension modulus MA at most equal to 900 daN/mm, for an applied force F equal to 15% of the force at break FR of the said hooping layer (71).

6. Tyre according to any one of Claims 1 to 5, **in which** the hooping layer (71) has a secant extension modulus MA at most equal to 700 daN/mm, for an applied force F equal to 15% of the force at break FR of the said hooping layer (71).

7. Tyre according to any one of Claims 1 to 6, the hooping layer (71) comprising hoop reinforcers having a diameter D and spaced one from the next by an inter-reinforcer distance L, **in which** the ratio D/L between the diameter D of a hoop reinforcer and the distance L separating two consecutive hoop reinforcers is at least equal to 1 and at most equal to 8.

8. Tyre according to any one of Claims 1 to 7, the hooping layer (71) comprising hoop reinforcers having a diameter D and spaced one from the next by an inter-reinforcer distance L, **in which** the ratio D/L between the diameter D of a hoop reinforcer and the distance L separating two consecutive hoop reinforcers is at least equal to 2 and at most equal to 5.

9. Tyre according to any one of Claims 1 to 8, **in which** the hoop reinforcers comprise a textile material such as an aromatic polyamide or aramid, an aliphatic polyamide or nylon, a polyester such as a polyethylene terephthalate (PET), a polyethylene naphthenate (PEN), a polyketone or a textile material comprising cellulose fibres such as rayon or lyocell.

10. Tyre according to Claim 9, **in which** the hoop reinforcers comprise a combination of at least two distinct textile materials.

11. Tyre according to Claim 10, **in which** the hoop reinforcers are made of the combination of an aromatic polyamide or aramid and of a polyethylene terephthalate (PET).

12. Tyre according to any one of Claims 1 to 11, the hooping (71) and working (61) layers respectively having an axial width L_{F} and L_{T}, **in which** the hooping layer (71) has an axial width L_{F} less than the axial width L_{T} of the working layer (61), preferably when the hooping layer (71) is radially on the outside of the working layer (61).

13. Tyre according to any one of Claims 1 to 12, **in which** the working reinforcers of the working layer (61) form, with the circumferential direction (YY'), an angle A_{T} at least equal to 35° and at most equal to 45°.

14. Tyre according to any one of Claims 1 to 13, **in which** the carcass reinforcers of the at least one carcass layer (81) form, with the circumferential direction (YY') and in the equatorial plane (XZ), an angle A_{C2} at least equal to 60° and at most equal to 70°.
